# EUROPÄISCHE PATENTANMELDUNG

(11) **EP 2 787 169 A1**
(43) Veröffentlichungstag der Anmeldung: **08.10.2014**
(21) Anmeldenummer: 13162276.3
(22) Anmeldetag: 04.04.2013
(51) Int. Cl.: F01D 5/06, F01D 5/08

(54) **Rotor für eine Strömungsmaschine**

(71) Anmelder: MTU Aero Engines AG, 80995 München (DE)
(72) Erfinder: Stiehler, Frank, 04924 Bad Liebenwerda (DE); Klän, Stephan, 80469 München (DE)

(57) **Zusammenfassung**

Die Erfindung betrifft einen Rotor (10) für eine Strömungsmaschine, insbesondere für eine thermische Gasturbine, mit wenigstens einer Rotorscheibe (12) und einem mit der Rotorscheibe (12) verbundenen Rotorträger (24), wobei der Rotorträger (24) zumindest bereichsweise zwischen einem radial inneren Bereich des Rotors (10) und einem radial äußeren Bereich des Rotors (10) angeordnet ist und wenigstens eine Öffnung (30) zwischen dem radial inneren und dem radial äußeren Bereich zum Durchtritt von Kühlmedium umfasst, wobei in wenigstens einer Öffnung (30) des Rotorträgers (24) ein Führungsrohr (32) angeordnet ist, welches ausgebildet ist, um dem durch das Führungsrohr (32) aus dem radial inneren Bereich in den radial äußeren Bereich strömenden Kühlmedium eine Geschwindigkeitskomponente in Umfangsrichtung des Rotors (10) aufzuprägen. Die Erfindung betrifft weiterhin ein Verfahren zum Herstellen eines solchen Rotors (10) sowie eine Strömungsmaschine mit einem derartigen Rotor (10).

## Beschreibung

Die Erfindung betrifft einen Rotor der im Oberbegriff des Patentanspruchs 1 genannten Art für eine Strömungsmaschine. Die Erfindung betrifft weiterhin ein Verfahren zum Herstellen eines solchen Rotors sowie eine Strömungsmaschine mit einem derartigen Rotor.

Rotoren für Strömungsmaschine, beispielsweise für Flugzeugtriebwerke, weisen üblicherweise eine oder mehrere Rotorscheiben oder -ringe auf, die über im Wesentlichen ringförmige Rotorträger (Rotortrommel, Rotorwing) miteinander verbunden sind. Die Rotorscheiben weisen ihrerseits Rotorschaufeln auf, die bezüglich einer Drehachse des Rotors radial oberhalb des Rotorträgers angeordnet sind. Der Rotorträger trennt daher zumindest bereichsweise einen radial inneren Bereich des Rotors und einen radial äußeren Bereich des Rotors voneinander ab. Der radial äußere Bereich wird im montierten Zustand des Rotors auch als Ringraum bezeichnet und während des Betriebs der zugeordneten Strömungsmaschine vom jeweiligen Betriebsfluid durchströmt. Zu Kühlungszwecken weist der Rotorträger üblicherweise mehrere Kühlbohrungen auf, die den radial inneren Bereich des Rotors mit seinem radial äußeren Bereich fluidisch verbinden, so dass Kühlmedium aus der inneren Kavität des Rotors in den Ringraum strömen kann.

Als nachteilig an den bekannten Rotoren ist der Umstand anzusehen, dass beim Betrieb eines solchen Rotors Leistungsverluste aufgrund des Eintritts von Kühlmedium aus der inneren Kavität in den Ringraum entstehen, da die Geschwindigkeitsvektoren des Betriebsmediums und des Kühlmediums nicht gleichgerichtet sind. Dementsprechend sinkt hierdurch auch der Wirkungsgrad einer zugeordneten Strömungsmaschine.

Aufgabe der vorliegenden Erfindung ist es, einen Rotor der eingangs genannten Art zu schaffen, welcher eine verbesserte Einleitung eines Mediums aus einem radial inneren Bereich in einen radial äußeren Bereich des Rotors ermöglicht. Eine weitere Aufgabe ist es, ein Verfahren zum Herstellen eines solchen Rotors sowie eine Strömungsmaschine mit einem verbesserten Wirkungsgrad anzugeben.

Die Aufgaben werden erfindungsgemäß durch einen Rotor mit den Merkmalen des Patentanspruchs 1, durch ein Verfahren gemäß Patentanspruch 9 sowie durch eine Strömungsmaschine gemäß Patentanspruch 10 gelöst. Vorteilhafte Ausgestaltungen mit zweckmäßigen Weiterbildungen der Erfindung sind in den Unteransprüchen angegeben, wobei vorteilhafte Ausgestaltungen des Rotors als vorteilhafte Ausgestaltungen des Verfahrens und der Strömungsmaschine anzusehen sind.

Ein erster Aspekt der Erfindung betrifft einen Rotor für eine Strömungsmaschine, insbesondere für eine thermische Gasturbine, wobei eine verbesserte Einleitung eines Mediums aus einem radial inneren Bereich in einen radial äußeren Bereich des Rotors erfindungsgemäß dadurch ermöglicht ist, dass in wenigstens einer Öffnung des Rotorträgers ein Führungsrohr angeordnet ist, welches ausgebildet ist, um dem durch das Führungsrohr aus dem radial inneren Bereich in den radial äußeren Bereich strömenden Kühlmedium eine Geschwindigkeitskomponente in Umfangsrichtung des Rotors aufzuprägen. Mit anderen Worten ist es erfindungsgemäß vorgesehen, dass wenigstens ein Führungsrohr vorgesehen ist, welches eine Verringerung von Strömungsverlusten beim Betrieb des Rotors ermöglicht, indem dem aus dem inneren Bereich des Rotors strömenden Kühlmedium beim Durchströmen des Führungsrohrs eine Geschwindigkeitskomponente in Umfangsrichtung des Rotors aufgeprägt wird, so dass während des Betriebs des Rotors zumindest eine Verringerung der Unterschiede zwischen den Geschwindigkeitsvektoren des im radial äußeren Bereich strömenden Betriebsmediums und dem in den äußeren Bereich strömenden Kühlmediums erreicht wird. Die Erfindung beruht dabei auf der Erkenntnis, dass Kühlöffnungen bzw. Kühlluftbohrungen in herkömmlichen Rotorträgem aufgrund der vergleichsweise geringen Dicken bzw. Wandstärken von Rotorträgem nicht genügend tangential-wirkende Flächen bieten, um dem Kühlmediumstrom den gewünschten Drall in Umfangsrichtung aufzuprägen. Durch die erfindungsgemäße Integration wenigstens eines Führungsrohrs in den Rotorträger ist es auf konstruktiv einfache, zuverlässige und kostengünstige Weise möglich, dem Kühlmedium unabhängig von der Rotorträger- bzw. Rotorwingstärke einen ausreichenden Drall beim Durchströmen des Führungsrohrs aufzuprägen, so dass die Geschwindigkeitsvektoren des Betriebsmediums und des Kühlmediums zumindest stark angeglichen werden. Hierdurch wird auch der Wirkungsgrad einer zugeordneten Strömungsmaschine vorteilhaft gesteigert. Die Geometrie des Führungsrohrs kann dabei optimal an unterschiedliche Ausführungsformen und Einsatzzwecke des Rotors angepasst werden. Darüber hinaus besteht die vorteilhafte Möglichkeit, bereits vorhandene Rotoren mit einem oder mehreren Führungsrohren nachzurüsten. Die Verwendung wenigstens eines Führungsrohrs erlaubt es zudem, die Wandstärken des Rotorträgers zumindest bereichsweise zu verringern, wodurch entsprechende Gewichtssenkungen erzielt werden. Weiterhin ist das Führungsrohr von Schalenlasten des Rotorträgers entkoppelt. Die Geometrie des Führungsrohrs kann dabei ebenfalls in Abhängigkeit der Ausgestaltung und des Einsatzzwecks des Rotors gewählt werden. Beispielsweise kann das Führungsrohr eine zylindrische Bohrung bzw. eine runde oder unrunde Querschnittsgeometrie aufweisen. Alternativ oder zusätzlich kann das Führungsrohr zumindest bereichsweise unregelmäßig, schraubenförmig oder dergleichen ausgebildet sein und/oder Leitelemente zur Strömungsbeeinflussung aufweisen. Anstelle einer oder mehrerer Rotorscheiben kann der Rotor grundsätzlich auch einen oder mehrere Rotorringe umfassen.

Eine konstruktiv einfache und kostengünstige Ausgestaltung des Führungsrohrs zur Aufprägung einer Geschwindigkeitskomponente in Umfangrichtung des Rotors wird in einer vorteilhaften Ausgestaltung der Erfindung dadurch erreicht, dass eine Länge des Führungsrohrs größer als eine Wandstärke des Rotorträgers im Bereich der Öffnung ist. Die Länge des Führungsrohrs kann dabei in Abhängigkeit der konkreten Ausgestaltung des Rotors gewählt werden.

In einer weiteren vorteilhaften Ausgestaltung der Erfindung ist vorgesehen, dass ein Verhältnis zwischen der Länge und dem Durchmesser des Führungsrohrs mindestens 1,5 beträgt. Hierdurch wird eine besonders zuverlässige Aufprägung einer Geschwindigkeitskomponente in Umfangrichtung des Rotors erzielt. Beispielsweise kann ein Verhältnis zwischen der Länge und dem Durchmesser des Führungsrohrs einen Wert von 1,5, 1,6, 1,7, 1,8, 1,9, 2,0, 2,1, 2,2, 2,3, 2,4, 2,5, 2,6, 2,7, 2,8, 2,9 oder mehr besitzen.

Weitere Vorteile ergeben sich, indem das Führungsrohr wenigstens ein Anschlagselement umfasst, mittels welchem eine Montageposition des Führungsrohrs am Rotorträger definiert ist. Dies erlaubt eine besonders einfache Montage des Führungsrohrs, das lediglich von einer Seite des Rotorträgers aus in die entsprechende Öffnung eingeführt werden muss, bis das Anschlagselement an der Wand des Rotorträgers anliegt und eine weitere Bewegung in Einschubrichtung verhindert. Darüber hinaus kann mit Hilfe eines Anschlagselements auf konstruktiv einfache Weise definiert werden, wie weit das Führungsrohr in den radial inneren Bereich und wie weit das Führungsrohr in den radial äußeren Bereich des Rotors ragt. Das Anschlagselement kann beispielsweise als abstehende Nase oder dergleichen ausgebildet sein.

In einer weiteren vorteilhaften Ausgestaltung der Erfindung ist das Anschlagselement als am Au-βenumfang des Führungsrohrs umlaufender Ring ausgebildet. Auf diese Weise wird eine mechanisch besonders stabile Abstützung des Anschlagselements am Rotorträger erzielt.

Weitere Vorteile ergeben sich, wenn der Rotorträger im Bereich der Öffnung eine mit dem wenigstens einen Anschlagselement korrespondierende Vertiefung umfasst, wobei das wenigstens eine Anschlagselement des Führungsrohrs in der Montageposition des Führungsrohrs zumindest bereichsweise innerhalb der Vertiefung angeordnet ist. Hierdurch wird eine verbesserte Abstützung des Führungsrohrs am Rotorträger erzielt. Darüber hinaus kann mit Hilfe einer derartigen Vertiefung in Abhängigkeit der Ausgestaltung des Anschlagselements ein einfacher Verdrehschutz realisiert werden. Weiterhin kann die Vertiefung zur Anbindung des Führungsrohrs mittels einer Presspassung verwendet werden.

In einer weiteren vorteilhaften Ausgestaltung der Erfindung ist vorgesehen, dass das Führungsrohr zumindest im Wesentlichen radial bezüglich einer Drehachse des Rotors angeordnet ist. Hierdurch wird eine besonders gute Drallaufprägung ermöglicht. Unter einer zumindest im Wesentlichen radialen Ausrichtung des Führungsrohrs wird im Rahmen der Erfindung eine Winkelabweichung der Bauteilachse des Führungsrohrs von maximal ±10° gegenüber einer rechtwinkligen Anordnung verstanden.

Eine besonders effiziente Kühlung wird in weiterer Ausgestaltung der Erfindung dadurch ermöglicht, dass der Rotorträger mehrere voneinander beabstandete Öffnungen umfasst, in welchen jeweils ein Führungsrohr angeordnet ist. Die Öffnungen sind dabei vorzugsweise über den Umfang und/oder über die Länge des Rotorträgers verteilt. Hierdurch ist eine Kühlmediumeinleitung an mehreren Stellen des Rotors ermöglicht, wobei dem eingeleiteten Kühlmedium an jeder Stelle die gleiche oder eine unterschiedliche Geschwindigkeitskomponente in Umfangsrichtung aufgeprägt werden kann.

Ein zweiter Aspekt der Erfindung betrifft ein Verfahren zum Herstellen eines Rotors nach einem der vorhergehenden Ausführungsbeispiele, bei welchem in wenigstens einer Öffnung des Rotorträgers ein Führungsrohr festgelegt wird, welches ausgebildet ist, um dem aus dem radial inneren Bereich in den radial äußeren Bereich des Rotors strömenden Kühlmedium eine Geschwindigkeitskomponente in Umfangsrichtung des Rotors aufzuprägen. Die sich hieraus ergebenden Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Ein dritter Aspekt der Erfindung betrifft eine Strömungsmaschine, insbesondere eine thermische Gasturbine eines Flugzeugs, umfassend einen in einem Gehäuse angeordneten Rotor mit wenigstens einer Rotorscheibe und einem mit der Rotorscheibe verbundenen Rotorträger, wobei der Rotorträger zumindest bereichsweise zwischen einer radial inneren Kavität des Gehäuses und einem Ringraum des Gehäuses angeordnet ist und wenigstens eine Öffnung zwischen der radial inneren Kavität und dem Ringraum umfasst. Erfindungsgemäß ist dabei vorgesehen, dass der Rotor nach einem der vorhergehenden Ausführungsbeispiele ausgebildet und/oder durch ein Verfahren nach dem vorhergehenden Ausführungsbeispiel hergestellt ist. Hierdurch weist die erfindungsgemäße Strömungsmaschine einen vorteilhaft gesteigerten Wirkungsgrad auf. Weitere sich hieraus ergebende Merkmale und deren Vorteile sind den Beschreibungen des ersten und des zweiten Erfindungsaspekts zu entnehmen, wobei vorteilhafte Ausgestaltungen des ersten und des zweiten Erfindungsaspekts als vorteilhafte Ausgestaltungen des dritten Erfindungsaspekts und umgekehrt anzusehen sind.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: einen schematischen Längsschnitt durch einen erfindungsgemäßen Rotor; und
- Fig. 2: eine vergrößerte Ansicht des in Fig. 1 gezeigten Details II.

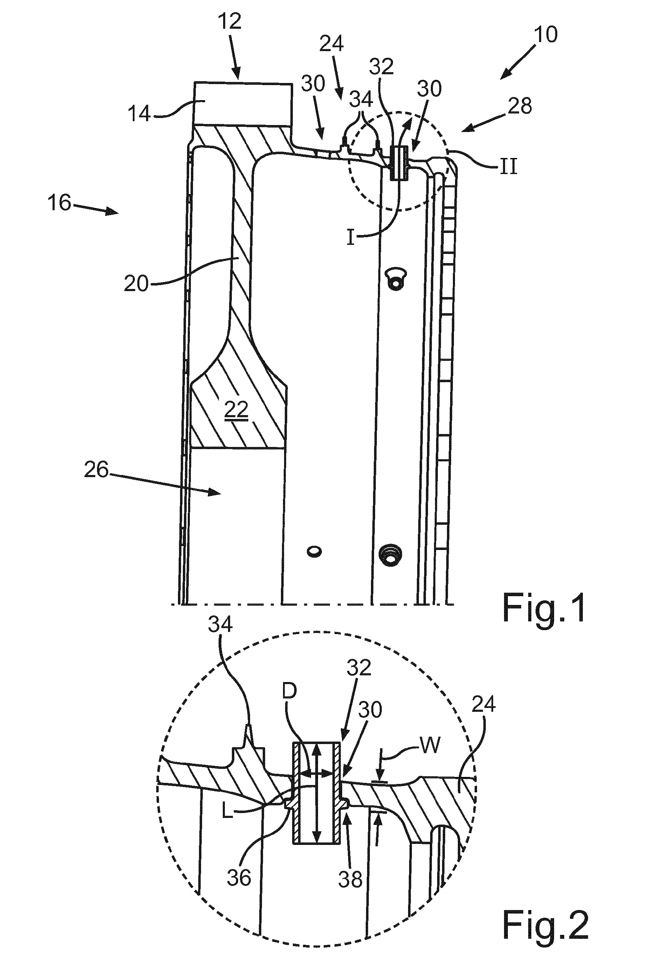

Fig. 1 zeigt einen schematischen Längsschnitt durch einen erfindungsgemäßen Rotor 10 für ein Flugzeugtriebwerk und wir im Folgenden in Zusammenschau mit Fig. 2 erläutert werden, in welcher eine vergrößerte Ansicht des in Fig. 1 gezeigten Details II abgebildet ist. Der Rotor 10 ist in an sich bekannter Weise in einem aus Gründen der Übersichtlichkeit nicht näher dargestellten Gehäuse des Flugzeugtriebwerks angeordnet und umfasst eine als sogenannte Blisk-Scheibe ausgebildete Rotorscheibe 12, an deren Außenumfangsseite eine Vielzahl von Rotorschaufeln (nicht gezeigt) angeordnet sind. Grundsätzlich kann anstelle der Rotorscheibe 12 auch ein Rotorring vorgesehen sein. Der Rotor 10 ist insgesamt um eine Drehachse (nicht dargestellt) drehbar bzw. rotationssymmetrisch ausgebildet. Von der Rotorscheibe 12 ist im Wesentlichen eine außenumfangsseitige Plattform 14 erkennbar, an welche sich radial nach innen ein Unterplattformbereich 16 anschließt. Der Unterplattformbereich 16 geht radial in Richtung zur Drehachse des Rotors 10 in einen Scheibenhals 18 über, der den Unterplattformbereich 16 mit einem Scheibenkörper 20 verbindet. Das radiale innere Ende des Scheibenkörpers 20 wird durch eine Nabe 22 gebildet, welche ein Gegengewicht zu den Rotorschaufeln darstellt. Vom Unterplattformbereich 16 steht auf der rechten Seite der Rotorscheibe 12 ein Rotorträger oder Rotorwing 24 ab, der im Querschnitt im Wesentlichen winkelförmig ausgebildet ist. Der Rotorträger 24 trennt zumindest im Wesentlichen eine radial innere Kavität 26 des Rotors 10 und einen radial äußeren Ringraum 28 des Rotors 10 voneinander ab. Weiterhin umfasst der Rotorträger 24 mehrere Öffnungen 30, die grundsätzlich einen Durchtritt von Kühlmedium aus der Kavität 26 in den Ringraum 28 erlauben. In einer der Öffnungen 30 des Rotorträgers 24 ist dabei ein Führungsrohr 32 angeordnet, welches ausgebildet ist, Kühlmedium, das gemäß Pfeil I aus der radial inneren Kavität 26 in den radial äußeren Ringraum 28 strömt, eine Geschwindigkeitskomponente in Umfangsrichtung des Rotors 10 aufzuprägen. Die andere Öffnung 30 bietet demgegenüber nicht genügend tangential-wirkende Fläche, um den Kühlluftstrom in einen ausreichenden Drall zu versetzen. Grundsätzlich kann daher auch vorgesehen sein, dass in allen Öffnungen 30 des Rotors 10 jeweilige Führungsrohre 32 angeordnet sind.

Wie man insbesondere in Fig. 2 erkennt, ist das Führungsrohr 32 in einer Öffnung 30 angeordnet, die sich im Bereich eines Dichtelements 34 des Rotorträgers 24 befindet. Man erkennt weiterhin, dass eine Länge L des Führungsrohrs 32 deutlich größer als eine Wandstärke W des Rotorträgers 24 im Bereich der Öffnung 30 ist und dass darüber hinaus ein Verhältnis zwischen der Länge L und dem Durchmesser D des Führungsrohrs 32 mehr als 1,5 beträgt, wodurch eine besonders gute Drallaufprägung erzielt wird. Weiterhin wird deutlich, dass das Führungsrohr 32 ein ringförmiges Anschlagselement 36 umfasst, mittels welchem eine Montageposition des Führungsrohrs 32 am Rotorträger 24 definiert ist. Das Anschlagselement 36 ist in der gezeigten Montageposition in einer korrespondierenden Vertiefung 38 in der radial inneren Wandseite des Rotorträgers 24 bereichsweise angeordnet. Um eine besonders gute Aufprägung einer möglichst großen Geschwindigkeitskomponente in Umfangsrichtung zu erzielen, ist das Führungsrohr 32 radial bezüglich der Drehachse des Rotors 10 angeordnet. Mit anderen Worten wird das Kühlmedium gezwungen, das Führungsrohr 32 senkrecht zur Drehachse zu durchströmen. Die Wandstärke W des Rotorträgers 24 kann aufgrund der verbesserten Strömungsverhältnisse vergleichsweise dünner ausgebildet werden, wodurch eine entsprechende Gewichtsreduktion erzielt wird. Das bzw. die Führungsrohre 32 sind zudem aus Schalenlasten des Rotorwings bzw. des Rotorträgers 24 entkoppelt.

## Patentansprüche

1. Rotor (10) für eine Strömungsmaschine, insbesondere für eine thermische Gasturbine, mit wenigstens einer Rotorscheibe (12) und einem mit der Rotorscheibe (12) verbundenen Rotorträger (24), wobei der Rotorträger (24) zumindest bereichsweise zwischen einem radial inneren Bereich des Rotors (10) und einem radial äußeren Bereich des Rotors (10) angeordnet ist und wenigstens eine Öffnung (30) zwischen dem radial inneren und dem radial äußeren Bereich zum Durchtritt eines Kühlmediums umfasst,
**dadurch gekennzeichnet, dass**
in wenigstens einer Öffnung (30) des Rotorträgers (24) ein Führungsrohr (32) angeordnet ist, welches ausgebildet ist, um dem durch das Führungsrohr (32) aus dem radial inneren Bereich in den radial äußeren Bereich strömenden Kühlmedium eine Geschwindigkeitskomponente in Umfangsrichtung des Rotors (10) aufzuprägen.

2. Rotor (10) nach Anspruch 1,
**dadurch gekennzeichnet, dass**
eine Länge (L) des Führungsrohrs (32) größer als eine Wandstärke (W) des Rotorträgers (24) im Bereich der Öffnung (30) ist.

3. Rotor (10) nach Anspruch 1 oder 2,
**dadurch gekennzeichnet, dass**
ein Verhältnis zwischen der Länge (L) und dem Durchmesser (D) des Führungsrohrs (32) mindestens 1,5 beträgt.

4. Rotor (10) nach einem der Ansprüche 1 bis 3,
**dadurch gekennzeichnet, dass**
das Führungsrohr (32) wenigstens ein Anschlagselement (36) umfasst, mittels welchem eine Montageposition des Führungsrohrs (32) am Rotorträger (24) definiert ist.

5. Rotor (10) nach Anspruch 4,
**dadurch gekennzeichnet, dass**
das Anschlagselement (36) als am Außenumfang des Führungsrohrs (32) umlaufender Ring ausgebildet ist.

6. Rotor (10) nach Anspruch 4 oder 5,
**dadurch gekennzeichnet, dass**
der Rotorträger (24) im Bereich der Öffnung (30) eine mit dem wenigstens einen Anschlagselement (36) korrespondierende Vertiefung (38) umfasst, wobei das wenigstens eine Anschlagselement (36) des Führungsrohrs (32) in der Montageposition des Führungsrohrs (32) zumindest bereichsweise innerhalb der Vertiefung (38) angeordnet ist.

7. Rotor (10) nach einem der Ansprüche 1 bis 6,
**dadurch gekennzeichnet, dass**
das Führungsrohr (32) zumindest im Wesentlichen radial bezüglich einer Drehachse des Rotors (10) angeordnet ist.

8. Rotor (10) nach einem der Ansprüche 1 bis 7,
**dadurch gekennzeichnet, dass**
der Rotorträger (24) mehrere voneinander beabstandete Öffnungen (30) umfasst, in welchen jeweils ein Führungsrohr (32) angeordnet ist.

9. Verfahren zum Herstellen eines Rotors (10) nach einem der Ansprüche 1 bis 8, bei welchem in wenigstens einer Öffnung (30) des Rotorträgers (24) ein Führungsrohr (32) festgelegt wird, welches ausgebildet ist, um dem durch das Führungsrohr (32) aus dem radial inneren Bereich in den radial äußeren Bereich des Rotors (10) strömenden Kühlmedium eine Geschwindigkeitskomponente in Umfangsrichtung des Rotors (10) aufzuprägen.

10. Strömungsmaschine, insbesondere thermische Gasturbine eines Flugzeugs, umfassend einen in einem Gehäuse angeordneten Rotor (10) mit wenigstens einer Rotorscheibe (12) und einem mit der Rotorscheibe (12) verbundenen Rotorträger (24), wobei der Rotorträger (24) zumindest bereichsweise zwischen einer radial inneren Kavität (26) des Gehäuses und einem Ringraum (28) des Gehäuses angeordnet ist und wenigstens eine Öffnung (30) zwischen der radial inneren Kavität (26) und dem Ringraum (28) zum Durchtritt von Kühlmedium umfasst,
**dadurch gekennzeichnet, dass**
der Rotor (10) nach einem der Ansprüche 1 bis 8 ausgebildet und/oder durch ein Verfahren nach Anspruch 9 hergestellt ist.
